# EUROPÄISCHE PATENTSCHRIFT

(11) **EP 0 258 696 B1**
(45) Veröffentlichungstag und Bekanntmachung des Hinweises auf die Patenterteilung: **21.07.1993**
(21) Anmeldenummer: 87111663.8
(22) Anmeldetag: 12.08.1987
(51) Int. Cl.: B21J 13/10

(54) **Schmiedemanipulator**
Forging manipulator
Manipulateur de forgeage

(30) Priorität: 21.08.1986 DE 3628407; 16.09.1986 DE 3631440; 11.10.1986 DE 3635952
(43) Veröffentlichungstag der Anmeldung: 09.03.1988
(73) Patentinhaber: SMS Hasenclever GmbH, D-40035 Düsseldorf (DE)
(72) Erfinder: Schubert, Peter, D-4044 Kaarst 2 (DE)
(74) Vertreter: Pollmeier, Felix, Dipl.-Ing.

(56) Entgegenhaltungen:
- DE-B- 1 262 739
- DE-C- 2 121 122
- US-A- 3 854 418
- US-A- 3 901 161

## Beschreibung

Die Erfindung betrifft einen Schmiedemanipulator gemäß Oberbegriff des Patentanspruchs 1, wie er insbesondere im Zusammenwirken mit Schmiedemaschinen benötigt wird. Schmiedemaschinen, auch als Radial- Uniformmaschinen bezeichnet, sind mit vier zentrisch bewegten Werkzeugen besetzt, die das Schmiedestück gleichmäßig mit gegenüberstehenden Werkzeugen verformen, wobei das Schmiedestück in der Hauptachse der Schmiedemaschine verbleibt. Dem Manipulator obliegt somit nur die Aufgabe, das Schmiedestück zu drehen und axial zu bewegen, so daß der Zangenträger mit den das Schmiedestück greifenden Zangen nur drehbar in einem Schlitten oder Wagen gelagert wird, und der Schlitten oder Wagen entlang einer zur Hauptachse der Schmiedemaschine paralleleln Führungsschiene verfahrbar ist. Die durch die begrenzte Beweglichkeit der Zangenträger mögliche einfache Bauweise kommt diesen Manipulatoren sehr entgegen, die schmal gehalten werden sollen, um die Zugänglichkeit zur Schmiedemaschine selbst bestmöglich zu halten und um die Ausladung an den Be- und Entladeeinrichtungen und damit diese Einrichtungen selbst in geringen Abmessungen ausführen zu können, was wiederum der Zugänglichkeit der Schmiedemaschine an sich dient.

Zum Verfahren der Schlitten oder Wagen dieser Schmiedemanipulatoren könnten Fahrantriebe vorgesehen werden, wie sie für Schmiedemanipulatoren an sich bekannt und gebräuchlich sind. Diese bestehen aus einem Motor, der über ein Untersetzungsgetriebe ein Zahnrad treibt, welches in Zahnstangen oder Triebstöcke eingreift, die entlang der Führungsschiene angeordnet sind, wie z.B. durch die DE-C- 2 121 122 bekanntgeworden. Sie sind mit dem Nachteil erheblichen Platzbedarfs in der Breite behaftet und machen den Vorteil zunichte, den die Manipulatoren zu Schmiedemaschinen in ihrer einfachen Bauweise besitzen. Daher werden zum Verfahren der Schlitten oder Wagen dieser Schmiedemanipulatoren Kolben-Zylinder-Einheiten eingesetzt, deren Eignung wegen des großen Verfahrweges an sich nicht gegeben ist. Einschränkend kommt überdies hinzu, daß die Manipulatoren für den Durchgang von Werkstücken und insbesondere für den Durchgang von Dornstangen zum Schmieden von Hohlkörpern über einen Dorn eine freie Mitte im gesamten Arbeitsbereich erfordern.

Aus der US-A-3 901 161 ist es für einen anderen Gegenstand als einen Schmiedemanipulator für eine Schmiedemaschine, nämlich einen auf Schienen verfahrbaren Wagen eines Transportsystems bekannt, bei einem aus einem Motor, einem Getriebe und einem zur Vorwärtsbewegung des Wagens in eine Zahnstange des Verfahrweges eingreifenden Zahnrad bestehenden Fahrantrieb die Zahnräder auf die Fahrzeugmitte geneigt anzuordnen. Die Neigung der Zahnräder ist dabei so, daß sich ihre durch die Rotationsebene verlaufenden Symmetrieachsen in der Vertikalachse des Wagens oberhalb der Rollen bzw. Wagenräder schneiden. Mit dieser Anordnung soll vermieden werden, daß beim Verfahren über die Antriebe eingeleitete Momente ein Schaukeln des Wagens um seine Längsachse bewirken.

Der Erfindung liegt die Aufgabe zugrunde, einen einfachen, langhubigen Verfahrantrieb für einen Schmiedemanipulator zu schaffen, der bei freier Mitte einen geringen Raumbedarf in der Breite des Manipulators hat.

Diese Aufgabe wird erfindungsgemäß dadurch gelöst, daß beidseitig des Schlittens oder Wagens Führungsschienen und auf geneigten Basisflächen Zahnstangen oder Triebstöcke angeordnet und zwei Fahrantriebe so am Schlitten oder Wagen befestigt sind, daß Motor, Getriebe und Zahnrad jedes Fahrantriebs eine gemeinsame Achse haben und diese zwei Achsen V-förmig angeordnet sind.

Somit läßt sich eine freie Mitte des Manipulators erreichen, ohne den Durchgang für Werkstücke und/oder Dornstangen aufgrund der Fahrtriebsanordnung einzuschränken.

Besonders vorteilhaft ist nach einem weiteren Merkmal der Erfindung die Anordnung der Basisflächen zu den Zahnstangen oder Triebstöcken und die Anordnung der Achsen der Fahrantriebe unter einem Winkel von 60° geneigt zur Horizontalen.

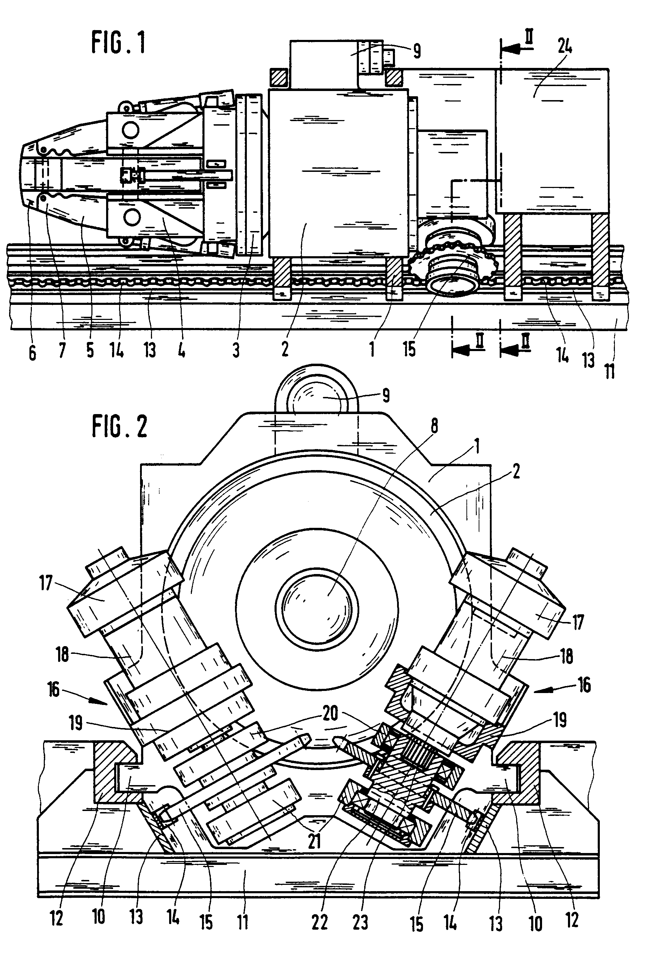

Die Erfindung wird nachfolgend anhand eines in der Zeichnung dargestellten Ausführungsbeispiels näher erläutert. Es zeigen
- Figur 1: einen Schmiedemanipulator in einer Seitenansicht; und
- Figur 2: in einem Schnitt nach der in Figur 1 eingetragenen Schnittlinie II-II.

In einem Schlittengestell 1 ist ein Lagerkörper 2 befestigt, in dem drehbar ein Zangenträger 3 gelagert ist, in dessen Lagerkopf 4 Zangenarme 5 mit in ihnen schwenkbar befestigten Klemmbacken 6 schwenkbar gelagert sind. Die aus den Zangenarmen 5 und den Klemmbacken 6 gebildeten Zangen 7 sind durch nicht dargstellte Stellmittel zu öffnen und zu schließen. Zwischen den Zangen 7 mit ihren Stellmitteln und im gesamten Zangenträger 3 ist eine durchgehende Öffnung 8 vorgesehen, durch die Schmiedestücke oder Dornstangen zum Schmieden von Hohlkörpern in die nicht dargestellte Schmiedemaschine axial eingeführt werden können. Gedreht wird der Zangenträger 3 im Lagerkörper 2 durch einen Hydraulikmotor 9 über nicht dargstellte Zahnräder.

Das Schlittengestell 1 ist mit Kufen 10 versehen. Ein Fundamentrahmen 11 ist mit zwei U-förmigen Führungssschienen 12 versehen, in denen die Kufen 10 des Schlittengestells 1 gleiten. Unterhalb der Führungsschienen 12 sind Basisplatten 13 geneigt angeordnet, auf deren Oberflächen Zahnstangen oder Triebstöcke 14 befestigt sind. In die Zahnstangen oder Triebstöcke 14 greifen Zahnräder 15 ein, die Fahrantrieben 16 zugeordnet sind, die mit ihren Achsen wie die Oberflächen der Basisplatten 13 für die Zahnnstangen oder Triebstöcke 14 um 60° geneigt zur Horizontalen und V-förmig zueinander angeordnet sind. Die Fahrantriebe 16 bestehen aus den Hydraulikmotoren 17 und den Untersetzungsgetrieben 18, die an Konsolen 19 angeflanscht sind. In Lagerböcken 20 und 21 sind die Zahnräder 15 gelagert. In die Wellen 22 der Zahnräder 15 greifen die Abtriebswellen der Untersetzungsgetriebe 18 mit Vielkeilwellen 23 ein.

Die Hydraulikmotoren 9 und 17 sowie die nicht dargestellten Stellmittel für die Zangenarme 5, die als hydraulisch beaufschlagbare Kolben-Zylinder-Einheiten ausgebildet sind, werden von einer in den Einzelheiten nicht dargestellten zentralen Ölversorgung 24 gespeist und von dort gesteuert.

## Patentansprüche

1. Schmiedemanipulator, insbesondere für eine mit vier zentrisch bewegten Werkzeugen arbeitende Schmiedemaschine, dessen das Schmiedestück greifenden Zangen (7) mit ihrem Zangenträger (3) in einem Schlitten oder Wagen (1) um eine in der Hauptachse der Schmiedemaschine liegende Achse drehbar sind, und bei dem der Schlitten oder Wagen entlang einer zur Hauptachse der Schmiedemaschine parallelen Führungsschiene (12) verfahrbar und hierzu mit einem ein Zahnrad (15), ein Getriebe (18) und einen Motor (17) aufweisenden Fahrantrieb (16) versehen ist, der mit dem Zahnrad (15) in eine entlang der Führungsschiene (12) angeordnete Zahnstange oder einen Triebstock (14) eingreift,
**dadurch gekennzeichnet,**
daß beidseitig des Schlittens oder Wagens (1) Führungsschienen (12) und auf geneigten Basisflächen (13) Zahnstangen oder Triebstöcke (14) angeordnet sind und zwei Fahrantriebe (16) so am Schlitten oder Wagen befestigt sind, daß Motor (17), Getriebe (18) und Zahnrad (15) jedes Fahrantriebs (16) eine gemeinsame Achse haben und diese zwei Achsen V-förmig angeordnet sind.

2. Schmiedemanipulator nach Anspruch 1,
dadurch gekennzeichnet,
daß die Basisflächen (13) zu den Zahnstangen oder Triebstöcken (14) und Achsen der Fahrantriebe (16, 17, 18) 60° geneigt zur Horizontalen angeordnet sind.

## Claims

1. A forging manipulator, in particular for a forging machine operating with four centrally moved tools, the grippers (7) of this forging manipulator - which grip the forged piece - being mounted with their gripper carrier (3) in a slide or carriage (1) so as to be rotatable about an axis lying in the main axis of the forging machine, and the slide or carriage being displaceable along a guide rail (12) parallel to the main axis of the forging machine and for this purpose being provided with a travel drive (16), which comprises a gearwheel (15), a gear (18) and a motor (17) and whose gearwheel (15) engages in a toothed rack or a drive shaft (14) arranged along the guide rail (12),
**characterised in that** guide rails (12) are arranged on both sides of the slide or carriage (1), and toothed racks or drive shafts (14) are arranged on inclined base surfaces (13), and in that two travel drives (16) are secured to the slide or carriage in such a manner that the motor (17), gear (18) and gearwheel (15) of each travel drive (16) have a common axis and these two axes are arranged in a V.

2. A forging manipulator according to Claim 1,
**characterised in that** the base surfaces (13) of the toothed racks or drive shafts (14) and the axes of the travel drives (16, 17, 18) are inclined at an angle of 60° to the horizontal.

## Revendications

1. Manipulateur de forge, en particulier pour une machine à forger utilisant quatre outils déplacés par rapport au centre, dont les pinces (7) saisissant la pièce forgée sont disposées rotatives avec leur portepinces (3) autour d'un axe situé sur l'axe principal de la machine à forger dans un coulisseau ou un chariot (1), lequel est déplaçable en translation le long d'un rail de guidage (glissière ou rail de roulement) (12) parallèle à l'axe principal de la machine à forger et est pourvu à cet effet d'un organe de translation (16) comportant une roue dentée (15), un engrenage (18) et un moteur (17), organe de translation qui est en prise par la roue dentée (15) avec une crémaillère ou barre de propulsion (14) disposée le long du rail de guidage (12),
caractérisé en ce que
des rails de guidage (12) sont prévus des deux côtés du coulisseau ou du chariot (1), des crémaillères ou barres de propulsion (14) sont disposées sur des surfaces de base (13) inclinées et deux organes de translation (16) sont fixés au coulisseau ou au chariot de manière que le moteur (17), l'engrenage (18) et la roue dentée (15) de chaque organe de translation (16) possèdent un axe commun et que ces deux axes soient disposés en forme de V.

2. Manipulateur de forge selon la revendication 1, caractérisé en ce que les surfaces de base (13) pour les crémaillères ou barres de propulsion (14) et les axes des organes de translation (16, 17, 18) sont inclinés de 60° sur l'horizontale.
